(19) Europäisches Patentamt
European Patent Office
Office européen des brevets

(11) **EP 4 092 629 A2**

(12) **EUROPEAN PATENT APPLICATION**

(43) Date of publication:
**23.11.2022 Bulletin 2022/47**

(51) International Patent Classification (IPC):
**G06T 19/00** (2011.01)    **G06T 15/20** (2011.01)

(21) Application number: **22160829.2**

(52) Cooperative Patent Classification (CPC):
**G06T 19/006; G06T 15/205;** G06T 2215/16

(22) Date of filing: **08.03.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2021 CN 202110538084**

(71) Applicant: **Beijing Dajia Internet Information Technology Co., Ltd.**
**Beijing 100085 (CN)**

(72) Inventors:
• SHI, Kanle
  Beijing, 100085 (CN)
• ZHU, Tianqian
  Beijing, 100085 (CN)
• LI, Yazi
  Beijing, 100085 (CN)
• ZHENG, Wen
  Beijing, 100085 (CN)

(74) Representative: **Yang, Shu**
Withers & Rogers LLP
2 London Bridge
London SE1 9RA (GB)

(54) **METHOD AND APPARATUS FOR DISPLAYING OBJECTS, AND STORAGE MEDIUM**

(57)    Provided is a method for displaying objects, belonging to the field of computer technologies. The method includes: acquiring (201) a scene image and a plurality of object images of a target object; determining (202) X reference viewing angles from the viewing angles corresponding to the plurality of object images; generating (203) intermediate images corresponding to the X reference viewing angles by transforming, based on X pieces of target pixel point change information and position difference information between the X reference viewing angles and the target viewing angle, positions of pixel points in object images corresponding to the X reference viewing angles; and displaying (204) the intermediate images superimposed on the scene image.

**EP 4 092 629 A2**

Acquiring a scene image and a plurality of object images of a target object, wherein the plurality of object images correspond to different viewing angles — 201

Determining, based on a target viewing angle of the scene image, X reference viewing angles from the viewing angles corresponding to the plurality of object images, wherein the target viewing angle is a viewing angle at which the scene image is acquired, each of the X reference viewing angles is adjacent to the target viewing angle in terms of spatial position — 202

Generating intermediate images corresponding to the X reference viewing angles by transforming, based on X pieces of target pixel point change information and position difference information between the X reference viewing angles and the target viewing angle, positions of pixel points in object images corresponding to the X reference viewing angles, wherein the target pixel point change information indicates a pixel point change between the object image corresponding to the reference viewing angle and an object image corresponding to an adjacent viewing angle of the reference viewing angle, the adjacent viewing angle of the reference viewing angle is a viewing angle adjacent to the reference viewing angle in terms of spatial position, and each of the intermediate images indicates a display effect of the target object at the target viewing angle — 203

Displaying the intermediate images superimposed on the scene image — 204

**FIG. 2**

## Description

## TECHNICAL FIELD

The present disclosure relates to the field of computer technologies, and in particular, relates to a method and an apparatus for displaying objects, and a storage medium.

## BACKGROUND

Augmented reality (AR) is a technology that achieves a combination of virtual and real worlds, which superimposes an object in a real environment for enhanced display. At present, prior to superimposing an object in the real environment for enhanced display, a three-dimensional model corresponding to the object is built by a designer; and then the three-dimensional model is rendered to a real scene image.

## SUMMARY

Embodiments of the present disclosure provide a method and an apparatus for displaying objects, and a storage medium.

According to one aspect of the embodiments of the present disclosure, a method for displaying objects is provided. The method includes:

acquiring a scene image and a plurality of object images of a target object, wherein the plurality of object images correspond to different viewing angles;

determining, based on a target viewing angle of the scene image, X reference viewing angles from the viewing angles corresponding to the plurality of object images, wherein the target viewing angle is a viewing angle at which the scene image is acquired, each of the X reference viewing angles is adjacent to the target viewing angle in terms of spatial position, and X is a positive integer;

generating intermediate images corresponding to the X reference viewing angles by transforming, based on X pieces of target pixel point change information and position difference information between the X reference viewing angles and the target viewing angle, positions of pixel points in object images corresponding to the X reference viewing angles, wherein the target pixel point change information indicates a pixel point change between the object image corresponding to the reference viewing angle and an object image corresponding to an adjacent viewing angle of the reference viewing angle, the adjacent viewing angle of the reference viewing angle is a viewing angle adjacent to the reference viewing angle in terms of spatial position, and each of the intermediate images indicates a display effect of the target object at the target viewing angle; and

displaying the intermediate images superimposed on the scene image.

According to another aspect of the embodiments of the present disclosure, an apparatus for displaying objects is provided. The apparatus includes:

an image acquiring module, configured to acquire a scene image and a plurality of object images of a target object, wherein the plurality of object images correspond to different viewing angles;

a viewing angle determining module, configured to determine, based on a target viewing angle of the scene image, X reference viewing angles from the viewing angles corresponding to the plurality of object images, wherein the target viewing angle is a viewing angle at which the scene image is acquired, each of the X reference viewing angles is adjacent to the target viewing angle in terms of spatial position, and X is a positive integer;

an image transforming module, configured to generate intermediate images corresponding to the X reference viewing angles by transforming, based on X pieces of target pixel point change information and position difference information between the X reference viewing angles and the target viewing angle, positions of pixel points in object images corresponding to the X reference viewing angles, wherein the target pixel point change information indicates a pixel point change between the object image corresponding to the reference viewing angle and an object image corresponding to an adjacent viewing angle of the reference viewing angle, the adjacent viewing angle of the reference viewing angle is a viewing angle adjacent to the reference viewing angle in terms of spatial position, and each of the intermediate images indicates a display effect of the target object at the target viewing angle; and

an image displaying module, configured to display the intermediate images superimposed on the scene image.

According to another aspect of the embodiments of the present disclosure, a non-transitory computer-readable storage medium storing one or more program codes therein is provided, wherein the one or more program codes, when loaded and executed by a processor of an electronic device, cause the electronic device to perform the method for displaying the objects as described above.

## BRIEF DESCRIPTION OF THE DRAWINGS

FIG. 1 is an implementation environment of a method for displaying objects according to an exemplary embodiment of the present disclosure;

FIG. 2 is a flowchart of a method for displaying objects according to an exemplary embodiment of the present disclosure;

FIG. 3 is a flowchart of a method for displaying an object according to an exemplary embodiment of the present disclosure;

FIG. 4A is a schematic diagram of a viewing angle space according to an exemplary embodiment of the present disclosure and FIG. 4B is a schematic diagram of a viewing angle space according to another exemplary embodiment of the present disclosure;

FIG. 5 is a schematic diagram of a method for determining a reference viewing angle according to an exemplary embodiment of the present disclosure;

FIG. 6 is a flowchart of a method for displaying objects according to an exemplary embodiment of the present disclosure;

FIG. 7 is a block diagram of an apparatus for displaying objects according to an exemplary embodiment of the present disclosure; and

FIG. 8 is a block diagram of an electronic device according to an exemplary embodiment of the present disclosure.

## DETAILED DESCRIPTION

It should be noted that information involved in the present disclosure may be information authorized by a user or fully authorized by various parties.

Some terms involved in the embodiments of the present disclosure are explained for conveniently illustrating the technical process of the embodiments of the present disclosure.

Augmented reality (AR) is a technology that achieves a combination of virtual and real worlds. The AR technology widely uses multimedia, three-dimensional modeling, real-time tracking and registration, intelligent interaction, sensing and other technical means to simulate virtual information such as computer-generated texts, images, three-dimensional models, music, videos and the like, and then applies the simulated virtual information to the real world, such that these two types of information complement each other, thus achieving "augment" of the real world.

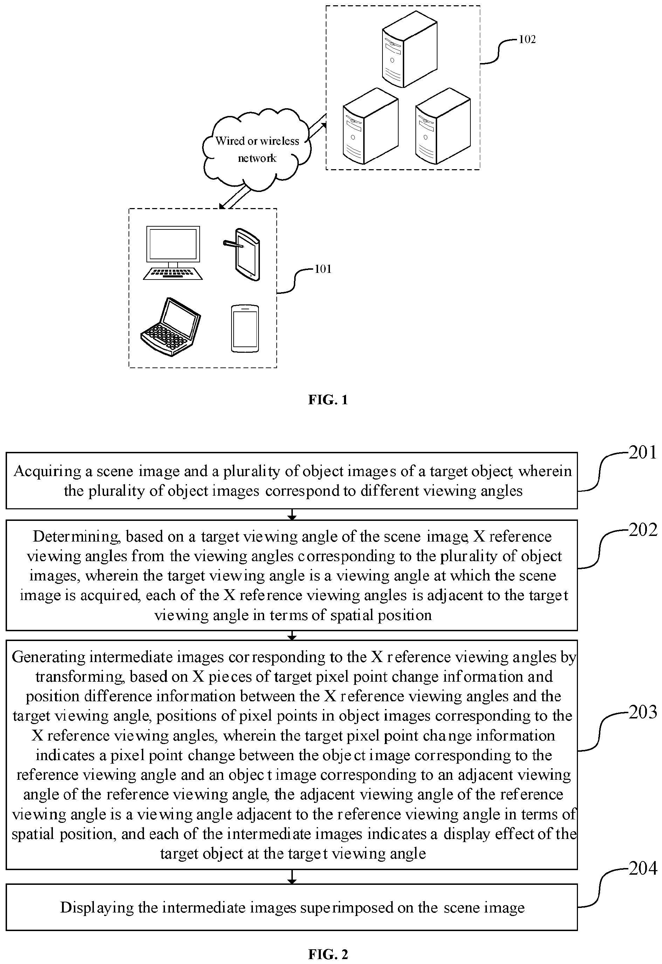

FIG. 1 is an implementation environment of a method for displaying objects according to an exemplary embodiment. Referring to FIG. 1, the implementation environment involves a terminal 101 and a server 102.

The terminal 101 is installed with and runs a target application that supports the AR technology, for example, the target application is a game application, a shopping application, an image acquisition application, or the like, which is not limited in embodiments of the present disclosure. Exemplarily, the terminal 101 can acquire an image of a real scene and display an object superimposed on the image of the real scene. Exemplarily, the terminal 101 is a terminal used by a user, and a user account is logged in the target application running in the terminal 101. The terminal 101 is a smart phone, a tablet, a laptop, a desktop computer, a smart watch, smart glasses, and the like; or the terminal 101 is an AR interactive device, and the like, which is not limited in the embodiments of the present disclosure. The terminal 101 generally refers to any one of a plurality of terminals, and the terminal 101 is only taken as an example for illustration in the embodiments of the present disclosure.

The server 102 is configured to provide backend services for the above target application. The server 102 can provide an image processing function. For example, the server 102 processes an object image and a scene image, and superimposes the object image on the scene image to exhibit a display effect of an object in a scene. In some embodiments, the server 102 undertakes primary image processing, and the terminal 101 undertakes secondary image processing; or the server 102 undertakes the secondary image processing, and the terminal 101 undertakes the primary image processing; or the server 102 or the terminal 101 undertakes the image processing, respectively and independently.

In some embodiments, the server 102 may be one or more servers. Exemplarily, the server 102 includes: an access server, an image processing server, and a database. The access server is configured to provide an access service for the terminal 101. The image processing server is configured to provide a backend server related to image processing. At least one neural network model capable of providing the image processing function is configured in the image processing server. Exemplarily, the above server is an independent physical server, a server cluster or a distributed system composed of a plurality of physical servers, or a cloud server that provides a basic cloud computing service such as a cloud service, a cloud database, cloud computing, a cloud function, cloud storage, a network service, cloud communication, a middleware service, a domain name service, a security service, a content delivery network (CDN), and a big data and artificial intelligence platform.

The terminal 101 and the server 102 is connected directly or indirectly via wired or wireless communication, which is not limited in the embodiments of the present disclosure.

In prior art augmented reality (AR) technology that combines virtual and real worlds, an object is superimposed in a real environment for achieving enhanced display. In prior art, prior to superimposing an object in the real environment for enhanced display, a three-dimensional model corresponding to the object is built by a designer; and then the three-dimensional model is rendered to a real scene image. Because of large amount of data required for the three-dimensional model, the AR technology typically controls the amount of the data to ensure the real time effect and as such certain detail information is missing and results undesired displaying effect. The method of the present disclosure displays an object in a scene image based on a plurality of object images acquired from different viewing angles and it is unnecessary to render a three-dimensional model to a real scene image. In the embodiments of the present disclosure, a method for displaying objects is provided, wherein the method may be combined with a plurality of application scenes and deployed in a plurality of applications. In some embodiments, the method for displaying the objects may be combined with a video application. The video application is provided with a virtual object prop. In the case that a user shoots a video, the virtual object prop may be applied, wherein the virtual object prop is superimposed and displayed in a picture shot by a current camera. In some embodiments, the virtual object prop is a hat, the picture shot by the current camera includes a person, and the virtual object prop is displayed on the head of the person in the picture. The method can also be applicable to multiple types of applications such as game applications and image acquisition applications, which are not limited in the embodiments of the present disclosure.

FIG. 2 is a flowchart of a method for displaying objects according to an exemplary embodiment. Referring to FIG. 2, the method for displaying the objects may be applicable to the above implementation environment, and the above terminal and server may be both regarded as electronic devices. In embodiments of the present disclosure, the electronic device is taken as an execution subject to illustrate the method for displaying the objects. In some embodiments, the method includes the following processes.

In 201, a scene image and a plurality of object images of a target object are acquired, wherein the plurality of object images correspond to different viewing angles.

The plurality of object images are acquired at different viewing angles. One object image corresponds to one viewing angle.

In some embodiments, the scene image and the object images are images stored in the electronic device, or images captured from different videos respectively, or images shot by a device with an image shooting function, or images generated by an application with an image generation function, which are not limited in the embodiments of the present disclosure. In the embodiments of the present disclosure, the viewing angle refers to an observation angle of the object, and the plurality of object images at the different viewing angles refer to images acquired by performing image acquisition on the target object from different observation angles, wherein the specific viewing angles from which the object images are acquired are determined by a developer, which is not limited in the embodiments of the present disclosure.

In the embodiments of the present disclosure, detail information of the target object at different viewing angle is sufficiently acquired by describing the target object based on the plurality of object images at the different viewing angles, such that a more realistic display effect is achieved when the target object is displayed in the scene image based on these object images.

In 202, X reference viewing angles are determined, based on a target viewing angle of the scene image, from the viewing angles corresponding to the plurality of object images, wherein the target viewing angle is a viewing angle at which the scene image is acquired, each of the X reference viewing angles is adjacent to the target viewing angle in terms of spatial position.

A number of the reference viewing angle being represented by X is taken as an example. X is a positive integer.

The target viewing angle refers to an observation angle of the scene. In the embodiments of the present disclosure, each of the viewing angles corresponds to one spatial position, wherein the spatial position indicates the position of the viewing angle relative to the target object to be shot. In the embodiments of the present disclosure, two viewing angles adjacent to each other mean that the two viewing angles are adjacent in terms of spatial position. In some embodiments, in the case that a difference value between a viewing angle corresponding to an object image and the target viewing angle satisfies a target condition, the viewing angle corresponding to the object image and the target viewing angle are considered as being adjacent in space, and the viewing angle corresponding to the object image is the reference viewing angle, that is, the observation angle corresponding to the reference viewing angle is similar to the observation angle corresponding to the target viewing angle. The difference value between the two viewing angles refers to the difference value between the spatial positions of the two viewing angles, and the target condition is determined by the developer. For example, in the case that the target condition is determined to be the difference value being less than a reference threshold, the electronic device determines the viewing angle that has a difference value from the target viewing angle less than the reference threshold as the reference viewing angle; or in the case that the target condition is determined to be the minimum difference value, the electronic device determines at least one viewing angle with the minimum difference value from the target viewing angle as the reference viewing angle. It should be noted that the number of the reference viewing angles is determined by the developer, for example, the number of the reference viewing angles is determined to be three, which is not limited in the embodiments of the present disclosure. In the embodiments of the present disclosure, by determining the reference viewing angle adjacent to the target viewing angle corresponding to the scene image, and displaying the target object based on the object image corresponding to the reference viewing angle, the observation angle of the target object is ensured to be in line with the observation angle of the scene, such that authenticity of the display of the target object in the scene is improved.

In 203, intermediate images corresponding to the X reference viewing angles are generated by transforming, based on X pieces of target pixel point change information and position difference information between the X reference viewing angles and the target viewing angle, positions of pixel points in object images corresponding to the X reference viewing angles, wherein the target pixel point change information indicates a pixel point change between the object image corresponding to the reference viewing angle and an object image corresponding to an adjacent viewing angle of the reference viewing angle, the adjacent viewing angle of the reference viewing angle is a viewing angle adjacent to the reference viewing angle in terms of spatial position, and each of the intermediate images indicates a display effect of the target object at the target viewing angle.

In some embodiments, the electronic device determines the target pixel point change information corresponding to the reference viewing angle by an optical flow method. The positions of pixel points in the object image corresponding to each reference viewing angle are transformed based on the target pixel point change information corresponding to each reference viewing angle and the position difference between the reference viewing angle and the target viewing angle, such that each of the object images is more in line with the observation angle of the scene. That is, the desired display effect of the target object at the target viewing angle is acquired. It should be noted that a method for acquiring the target pixel point change information or a method for transforming an image are not limited in the embodiments of the present disclosure. In some embodiments, X is greater than one and the electronic device may generate multiple intermediate images corresponding to the multiple reference viewing angles by transforming positions of pixel points in object images corresponding to the multiple reference viewing angles based on position difference information between the multiple reference viewing angles and the target viewing angle.

In 204, the intermediate images superimposed on the scene image are displayed.

In some embodiments, the electronic device processes each intermediate image into different transparencies, and display the scene image with the processed intermediate images superimposed on it, such that the display effect of the target object in the scene image is acquired. It should be noted that the method for superimposing the image is not limited in the embodiments of the present disclosure.

In the technical solution according to the embodiments of the present disclosure, the target object is described with the object images acquired from the plurality of viewing angles. The plurality of object images can sufficiently retain detail information of the target object. In the case that the target object superimposed on the scene image is displayed, an object image with a shooting angle adjacent to the target viewing angle is selected from the object images based on the target viewing angle corresponding to the scene image; image transformation is performed on the selected object image, such that the viewing angle corresponding to the transformed object image is more in line with the target viewing angle; and the transformed object image is superimposed on the scene image, such that the target object is displayed in the scene image more real.

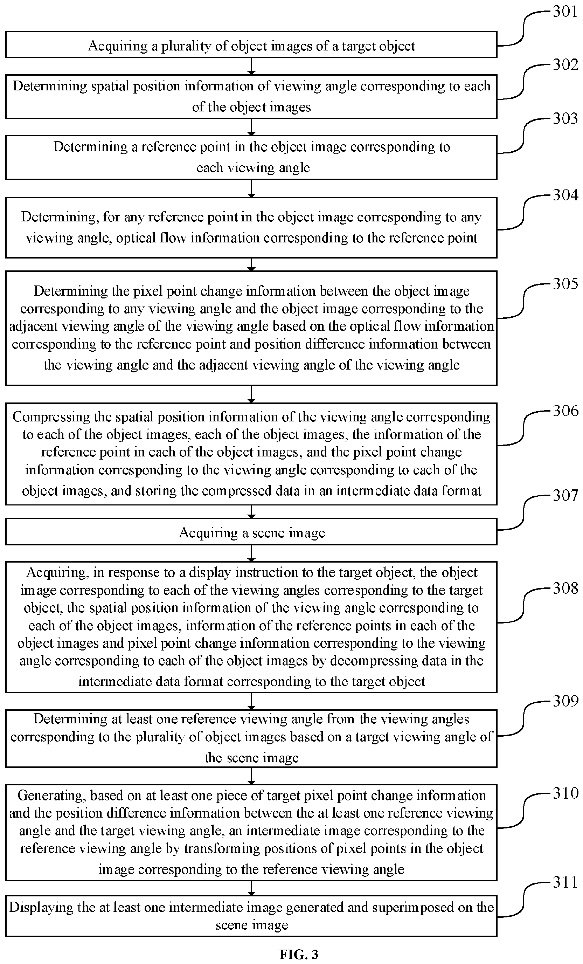

The descriptions associated with FIG. 2 briefly illustrate the embodiments of the present disclosure. The technical solutions of the embodiments of the present disclosure are further described below with reference to FIG. 3. FIG. 3 is a flowchart of a method for displaying an object according to an exemplary embodiment. The method for displaying the objects is applicable to the electronic device. Referring FIG. 3, the method includes the following processes.

In 301, a plurality of object images of a target object are acquired.

The target object is a real object or a virtual object, which is not limited in embodiments of the present disclosure. In some embodiments, the object images are acquired by any one of the following examples.

In a first example, the object images are acquired by shooting the target object at different viewing angles with a device with an image shooting function. Exemplarily, the different viewing angles are selected at an angle interval. For example, the image shooting device is arranged at an initial position, and the target object is taken as the center. From the initial position, the image shooting device shoots the target object each time it moves by a reference angle, such that the plurality of object images corresponding to different viewing angles are acquired. That is, the image shooting device shoots the target object from different shooting angles at a constant distance to acquire the plurality of object images corresponding to different viewing angles. The initial position and the reference angle are determined by the developer, which are not limited in the embodiments of the present disclosure.

In some embodiments, the different viewing angles are arbitrarily selected, or the different viewing angles are selected based on display requirements of the target object. For example, in the case that the front of the target object needs to be displayed in the scene image, a large number of shooting angles are selected on the front of the target object to shoot the target object, to comprehensively acquire the detail information of the front of the target object. In another example, in the case that the back and side of the target object need to be displayed in the scene image, a large number of shooting angles are selected on the back and side of the target object to shoot the target object, to comprehensively acquire the detail information of the back and side of the target object. It should be noted that the specific viewing angles from which the object images are acquired are not limited in the embodiments of the present disclosure.

In a second example, the object images are generated by the electronic device. In some embodiments, the object images are acquired by rendering a three-dimensional model of the target object. For example, the electronic device is installed with and runs a first application that supports the rendering of the three-dimensional model, wherein the first application includes the three-dimensional model of the target object. The electronic device renders the three-dimensional model of the target object at different viewing angles using the first application, and acquires the object images. The three-dimensional model of the target object is created in the first application, or is a three-dimensional model previously created and imported into the first application. The above process of acquiring the object images by rendering the three-dimensional model of the target object may be achieved based on a ray tracing algorithm, a triangular raster algorithm, and the like. The rendering method of the three-dimensional model is not limited in the embodiments of the present disclosure. In some embodiments, the object images are drawn images. For example, the electronic device is installed with and runs a second application that supports image drawing, and the user can draw the object images of the target object observed from the different viewing angles using the second application. It should be noted that the method for selecting the different viewing angles in the second example is the same as the method for determining the different viewing angles in the first manner, which is not limited herein.

It should be noted that the above descriptions of the method for acquiring the object images are only exemplary descriptions of a possible implementation, which are not limited in the embodiments of the present disclosure.

In some embodiments, the above object images are object images obtained under the same lighting conditions; or the above object images are object images obtained under different lighting conditions. For example, the electronic device acquires a plurality of groups of object images, wherein object images included in the same group are under the same lighting condition, and different groups of object images correspond to different lighting conditions.

In some embodiments, each of the object images carries lighting label information, wherein the lighting label information indicates the lighting condition corresponding to the object image. The electronic device determines the lighting condition corresponding to each of the object images by reading the lighting label information carried by the object image; or the electronic device is provided with a first recognizing model, wherein the first recognizing model is a convolutional neural network model, and the like. A structure of the first recognizing model is not limited in the embodiments of the present disclosure. Exemplarily, the first recognizing model is a model acquired by training with images under different lighting conditions. The electronic device inputs a plurality of object images into the first recognizing model, and recognize the lighting conditions corresponding to the object images using the first recognizing model. It should be noted that a method for determining the lighting conditions corresponding to the object images are not limited in the embodiments of the disclosure.

In some embodiments, in response to acquiring the object images, the electronic device removes the background of each of the object images, namely, performs matting on each of the object images to extract foreground object images from the background. Exemplarily, the electronic device is provided with a second recognizing model, wherein the second recognizing model is a convolutional neural network model, and the like. A structure of the second recognizing model is not limited in the embodiments of the present disclosure. The second recognizing model is a trained model that can distinguish a foreground and a background of the image. The electronic device inputs the object images into the second recognizing model, recognizes the background of each of the object images using the second recognizing model, and removes the background of each of the object images, to acquire the object images that includes the target object with the background image being excluded. It should be noted that the above process of removing the background of the object images is optional.

In 302, spatial position information of viewing angle corresponding to each of the object images is determined.

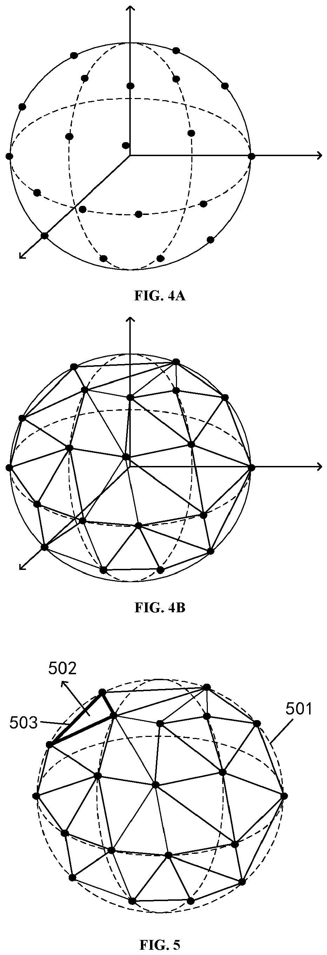

In some embodiments, a first spatial coordinate system is constructed with the target object as the center; and spatial position information of each of the viewing angles in the first spatial coordinate system is determined based on the relative position relationship between each of the viewing angles and the target object, namely, based on the relative position relationship between each of the viewing angles and the center of the first spatial coordinate system. The spatial position information is represented as position coordinates, that is, the spatial position information indicates a specific position of a viewing angle in the first spatial coordinate system; or the spatial position information is represented as a direction vector, that is, the spatial position information indicates a direction of a viewing angle relative to the target object. The specific form of the spatial position information is not limited in the embodiments of the present disclosure. In the embodiments of the present disclosure, an interval distance between the acquisition position of each of the object images and the target object being constant is taken as an example, that is, the interval between the acquisition position of each of the object images and the target object is a reference distance, the above first spatial coordinate system is a spherical coordinate system, the center of the spherical space is the position of the target object, and the positions of the viewing angles are distributed on the spherical surface, wherein the position coordinates of each viewing angle in the spherical coordinate system are represented by longitude coordinates and latitude coordinates. In the embodiments of the present disclosure, the spherical coordinate system is called a viewing angle space, in which the position coordinates of the viewing angles are marked. FIG. 4A is a schematic diagram of a viewing angle space according to an exemplary embodiment. As shown in FIG. 4A, the positions of the viewing angles are distributed on one spherical surface.

In some embodiments, the electronic device determines an adjacent viewing angle of each of the viewing angles in the viewing angle space by triangulating the above viewing angle space. In some embodiments, the electronic device transforms the spherical coordinate system into a Cartesian two-dimensional coordinate system, correspondingly represents the position of each of the viewing angles in the Cartesian two-dimensional coordinate system, and performs triangulation based on the positions marked in the Cartesian two-dimensional coordinate system to acquire a triangular mesh. The triangular mesh includes a plurality of non-overlapping triangles. The vertices of the triangles are the positions of the viewing angles, and the viewing angles at the vertices of the same triangle are adjacent viewing angles. The above triangulation method is the Delaunay triangulation algorithm, and the like, which is not limited in the embodiments of the present disclosure. The electronic device may also directly triangulate the viewing angle space based on the spherical coordinate system, which is not limited in the embodiments of the present disclosure. The triangulated viewing angle space is shown in FIG. 4B. For the triangulated viewing angle, any viewing angle specified in the viewing angle space can fall into a triangle, and the viewing angles at all the vertices of the triangle are the three viewing angles closest to the specified viewing angle. That is, the viewing angle at each vertex of the triangle is the adjacent viewing angle of the specified viewing angle.

It should be noted that the above descriptions of the method for acquiring the spatial position information of the viewing angle corresponding to each of the object images are only exemplary embodiments of a possible implementation, which are not limited in the embodiments of the present disclosure. It should be noted that the above process of determining the spatial position information corresponding to each of the object images is optional. In some embodiments, it is also possible to determine only the adjacent viewing angle of each of the viewing angles, without determining the accurate spatial position information of each of the viewing angles.

In the embodiments of the present disclosure, a number of object images being Y is taken as an example. The electronic device determines spatial position information of the Y object images, wherein Y is a positive integer not less than X.

In 303, a reference point is determined in the object image corresponding to each viewing angle.

In some embodiments, the process of determining the reference point in the object image by the electronic device includes the following two processes.

In a first process, for any object image, the electronic device determines a feature point in the object image based on an image feature of the object image. The feature point is a point that can label the target object in the object image. For example, the feature point is a point where a grey value of the object image changes drastically, or the point with larger curvature on the edge of the target object, or the like. The point in the object image that is selected as the feature point is not limited in the embodiments of the present disclosure.

In some embodiments, the electronic device performs sliding detection on the object image via a sliding window. During the process that the sliding window slides in a direction in a region of the object image, in the case that no pixel value in the sliding window jumps, it is determined that no feature point is included in the region; or in the case that a pixel value in the sliding window jumps, a feature point is determined at the point at which the pixel value jumps. The above feature point detection process may be realized based on Harris interest point detection algorithm, scale-invariant feature transform (SIFT) interest point detection algorithm, speeded up robust features (SURF) interest point detection algorithm, and the like. In some embodiments, the above feature point is manually labeled. It should be noted that a specific method by which the electronic device determines the feature point in the object image, or a number of determined feature points are not limited in the embodiments of the present disclosure.

In a second process, the electronic device acquires a triangular mesh corresponding to the object image by generating, based on the feature point, the triangular mesh on the object image, wherein vertices of each triangle in the triangular mesh are the reference points in the object image.

In some embodiments, the electronic device performs at least one time triangular mesh generation on the object image based on the feature point included in the object image with the contour of the object image as the boundary via the Delaunay triangulation interpolation algorithm. An intermediate triangular mesh corresponding to the object image is acquired each time triangular mesh generation is performed. In the case that the intermediate triangular mesh satisfies a second reference condition, the electronic device determines the intermediate triangular mesh as a triangular mesh corresponding to the object image. In the case that the intermediate triangular mesh does not satisfy the second reference condition, the electronic device performs next triangular mesh generation based on the intermediate triangular mesh until the triangular mesh acquired satisfies the second reference condition. The triangular mesh generated by the electronic device can cover the whole object image, and triangles included in the triangular mesh do not coincide with each other. The electronic device determines the vertices of each triangle in the acquired triangular mesh that satisfies the second reference condition as the reference points in the object image. The above second reference condition is determined by the developer, for example, the second reference condition is determined as the length of each side of each triangle in the triangular mesh is less than or equal to a side length threshold, or a number of the triangles included in the triangular mesh is greater than or equal to the number threshold, or the minimum angle of the triangles included in the triangular mesh is greater than or equal to the angle threshold, or the like, which is not limited in the embodiments of the present disclosure. In some embodiments, in response to generating triangular mesh, the electronic device can further optimize the acquired triangular mesh based on Lloyd Relaxation (which is a method for meshing a surface of an object).

It should be noted that the above description of the method for generating the triangular mesh on the object image is only exemplary description of a possible implementation. The specific method for generating triangular mesh on the object image is not limited in the embodiments of the present disclosure. In the embodiments of the present disclosure, by determining the reference points in the object image by generating the triangular mesh, optical flow information is calculated based on the reference points without determining optical flow information of each pixel point in the object image sequentially, such that the acquisition efficiency of the optical flow information is effectively improved.

It should be noted that in the first process and the second process above, the process for determining the reference point is illustrated by taking determining the reference point in any one of the object images as an example. In some other embodiments, for the object images corresponding to the Y viewing angles, the reference point can be determined based on the processes mentioned-above. That is, the electronic device determines a feature point in each of the Y object images based on an image feature of each of the Y object images, and acquires a triangular mesh corresponding to each of the Y object images by generating, based on the feature points, the triangular mesh on the Y object images.

In 304, for any reference point in the object image corresponding to any viewing angle, optical flow information corresponding to the reference point is determined.

The optical flow information indicates pixel point position change between the object image corresponding to an viewing angle and the object image corresponding to an adjacent viewing angle of the viewing angle, wherein the viewing angle and the adjacent viewing angle of the viewing angle are adjacent in terms of spatial position.

In some embodiments, the electronic device determines the optical flow information corresponding to any reference point in the object image by the optical flow method. Exemplarily, based on the spatial position information of each of the viewing angles acquired in 302, the electronic device can determine the adjacent viewing angle of each of the viewing angles. A pair of adjacent viewing angles I and J is represented as a pair of adjacent ordered viewing angles (I, J), and any reference point in the object image corresponding to the viewing angle I is recorded as the reference point I[k]. The electronic device acquires an image block of a neighborhood region of the reference point I[k] from the object image corresponding to the viewing angle I, records the image block as a first image block, and acquires a second image block from the object image corresponding to the viewing angle J, wherein a difference value between the second image block and the first image block satisfies a third reference condition. The third reference condition is determined by the developer. For example, the third reference condition is determined to be the difference value between the second image block and the first image block being less than or equal to a difference threshold, and the like, which is not limited in the embodiments of the present disclosure. The electronic device determines first position information of the first image block in the object image corresponding to the viewing angle I, and determines second position information of the second image block in the object image corresponding to viewing angle J, and determines a motion vector based on the first position information and the second position information. The motion vector is optical flow information corresponding to the reference point I[k]. In the embodiments of the present disclosure, since the optical flow information is represented in the form of a vector, the optical information may also be called an optical flow vector. In the embodiments of the present disclosure, in the case that a number of adjacent viewing angles of the viewing angle I is N (N is a positive integer), the electronic device can acquire N pieces of optical flow information corresponding to the reference point I[k]. In some embodiments, the above process of acquiring the optical flow information corresponding to a reference point is represented as the following formula (1):

[0071] $$\min E(S(I,I[k]) - S(J,I[k] + m[I,k,J])) \quad (1)$$

In the above formula, I and J represent two adjacent viewing angles; I[k] represents a reference point in the object image corresponding to the viewing angle I; S represents a neighborhood function for determining a neighborhood near a position in the image; S (I, I[k]) represents an image block in the neighborhood of the reference point I[k], namely, the above first image block; S(J, I[k] + m[I, k, J]) represents the above second image block; E represents an evaluation function for determining a difference value between the first image block and the second image block; and m[I, k, J] represents the above optical flow information, namely, the optical flow vector. The reference point I[k] moves m[I, k, J] to the position of I[k] + m[I, k, J]. Based on this position, a neighborhood region is determined in the object image corresponding to the viewing angle J, and the image block in the neighborhood region is the second image block. In the embodiments of the present disclosure, the optical flow information determined by the electronic device enables the value of the above formula (1) to be small.

It should be noted that the above description of the method for determining the optical flow information corresponding to the reference point in the object image corresponding to any viewing angle is only exemplary description of a possible implementation. The specific method for determining the optical flow information of the reference point is not limited in the embodiments of the present disclosure. In the embodiments of the present disclosure, the change situation of the object images corresponding to the viewing angles adjacent to each other is accurately and quickly determined by the optical flow method.

In 305, the pixel point change information between the object image corresponding to any viewing angle and the object image corresponding to the adjacent viewing angle of the viewing angle is determined based on the optical flow information corresponding to the reference point and position difference information between the viewing angle and the adjacent viewing angle of the viewing angle.

In some embodiments, for any viewing angle and any adjacent viewing angle of the viewing angle, the electronic device determines initial pixel point change information corresponding to each reference point based on the position difference information between the viewing angle and the adjacent viewing angle of the viewing angle and optical flow information corresponding to each reference point in the object image corresponding to the viewing angle, and generates, based on an average value of at least one piece of the initial pixel point change information corresponding to each reference point in the object image corresponding to the viewing angle, the pixel point change information corresponding to the viewing angle. That is, determining, based position difference information between a $Z^{th}$ viewing angle and an adjacent viewing angle of the $Z^{th}$ viewing angle and optical flow information corresponding to each reference point in the object image corresponding to the $Z^{th}$ viewing angle, initial pixel point change information corresponding to each reference point; and generating, based on an average value of at least one piece of initial pixel point change information corresponding to each reference point, the pixel point change information corresponding to the $Z^{th}$ viewing angle. Z is a positive integer less than or equal to Y.

Exemplarily, for the viewing angle I, there is at least one adjacent viewing angle J[0], J[1]...J[i]... and J[n]. For the reference point I[k] in the object image corresponding to the viewing angle I, the optical flow information of the reference point I[k] pointing to the other viewing angle J[i] is determined by the above 304 and be represented as m[I,k, J[i]]. The position difference information between the viewing angle I and the adjacent viewing angle J[i] is represented as J[i]-I. In the embodiments of the present disclosure, the relationship among the position difference information between any viewing angle and any adjacent viewing angle of the viewing angle, the optical flow information corresponding to each reference point in the object image corresponding to the viewing angle, and the initial pixel point change information corresponding to each reference point is represented as the following formula (2):

$$[0077] \quad m[I,k,J[i]] = M[I,k] * (J[i] - I) \quad (2)$$

In the above formula, i = 0, 1..., and n; i is a label representing a viewing angle adjacent to the viewing angle I; J[i] represents an adjacent viewing angle of the viewing angle I; m[I, k, J[i]] represents the optical flow information of the reference point I[k] pointing to the viewing angle J[i]; and M[I, k] represents initial pixel point change information corresponding to the reference point I[k]. In some embodiments, the electronic device solves the above formula (2) by singular value decomposition (SVD) decomposition, generalized inverse matrix solution and other methods. For any adjacent viewing angle J[i] adjacent to the viewing angle I, the initial pixel point change information M[I,k] corresponding to the reference point I[k] may be determined. The electronic device acquires the pixel point change information corresponding to the reference point I[k] by averaging the acquired at least one piece of the initial pixel point change information M[I, k]. In the embodiments of the present disclosure, the pixel point change information is represented as a tensor, and may also be referred to as an average optical flow tensor.

It should be noted that the above description of the method for determining the pixel point change information corresponding to each reference point is only exemplary description of a possible implementation. The specific method for determining the pixel point change information is not limited in the embodiments of the present disclosure.

It should be noted that the above 304 and 305 are the processes of acquiring the pixel point change information between the object image corresponding to the viewing angle and the object image corresponding to the adjacent viewing angle of the viewing angle. In the embodiments of the present disclosure, the electronic device can comprehensively acquire the change relationship between the object images corresponding to the viewing angles adjacent to each other based on the pixel point change information between the object images corresponding to the viewing angles adjacent to each other by the optical flow method, thereby facilitating the accurate display of the target object. That is, in the embodiments of the present disclosure, in response to determining a reference point in the object image corresponding to each of the Y viewing angles, the electronic device determines optical flow information corresponding to the reference point, and determines, based on the optical flow information corresponding to each of the reference points and position difference information between the Y viewing angles and the adjacent viewing angles of the Y viewing angles, the pixel point change information corresponding to each of the Y viewing angles.

In 306, the spatial position information of the viewing angle corresponding to each of the object images, each of the object images, the information of the reference point in each of the object images, and the pixel point change information corresponding to the viewing angle corresponding to each of the object images are compressed, and the compressed data is stored in an intermediate data format.

In some embodiments, the electronic device acquires binary stream data by compressing the spatial position information of each of the viewing angles, namely, compressing the triangulation processing result of the viewing angle space acquired in 302. The data compression method performed by the electronic device may be bitwise compression, topology compression, vertex storage compression, and the like, performed on the spatial position information corresponding to the viewing angle, which is not limited in the embodiments of the present disclosure.

In some embodiments, the electronic device acquires binary stream data by compressing the information of the reference points in each of the object images, namely, compressing the triangular mesh processing result of the object image acquired in 303. The data compression method performed by the electronic device may be bitwise compression, topology compression, vertex storage compression, and the like, performed on the spatial position information corresponding to the viewing angle, which is not limited in the embodiments of the present disclosure.

In some embodiments, the electronic device acquires binary stream data by compressing the pixel point change information corresponding to each of the viewing angles, namely, compressing the average optical flow tensor acquired in 305. The data compression method performed by the electronic device may be numerical quantization, binary flow compression, and the like, performed on the average optical flow tensor, which is not limited in the embodiments of the present disclosure.

In some embodiments, the electronic device compresses each of the object images. Exemplarily, the electronic device sorts the object images corresponding to the viewing angles based on the neighboring relationship between the viewing angles, such that the object images corresponding to the viewing angles adjacent to each other are stored adjacently. In some embodiments, the arrangement of the object images may be a zigzag arrangement, a loop arrangement, or the like, which is not limited in the embodiments of the present disclosure. In response to sorting the object images, the electronic device can acquire a sequence of image frames. The electronic device compresses the sequence of the image frames by a video compression method. A compression algorithm adopted by the electronic device may be any video compression algorithm such as h264 and h265, which is not limited in the embodiments of the present disclosure.

In some embodiments, the electronic device stores the above compressed data in an intermediate data format, and the intermediate data format includes light information of the target object. In the embodiments of the present disclosure, the data related to the target object is compressed and stored, and the data of the target object is decompressed and called in the case that the target object needs to be displayed, such that a storage space occupied by the data of each target object is effectively reduced.

It should be noted that the above 306 is optional. In some embodiments, the data related to the target object may not be compressed or stored.

In 307, a scene image is acquired.

In some embodiments, the electronic device acquires the scene image in response to a scene image acquisition instruction. Exemplarily, in response to the scene image acquisition instruction, the electronic device calls a camera to shoot an image, and takes the image shot by the camera as the scene image. Exemplarily, in response to the scene image acquisition instruction, the electronic device displays at least one image currently stored therein, and determines a selected image as the scene image. It should be noted that a specific method for acquiring the scene image is not limited in the embodiments of the present disclosure.

It should be noted that in the embodiments of the present disclosure, the process of acquiring the object image of the target object is performed first, and then the process of acquiring the scene image is performed. In some embodiments, the process of acquiring the scene image is performed before the process of acquiring the object image of the target object is performed; or both processes are performed at the same time, which is not limited in the embodiments of the present disclosure.

Exemplarily, in some scenes, a target application supporting augmented reality is installed and runs in the electronic device, the target object is set in the target application, and the user chooses to display the target object in the scene image. In this case, the object image of the target object, pixel point change information, and other relevant data are stored in the electronic device in advance. That is, the electronic device first performs the processes of acquiring the object image of the target object and performing data processing on the object image, namely, performing 301 to 306 first, and then performs the process of acquiring the scene image based on a user operation. In some embodiments, the image of the target object is uploaded by the user, which is not limited in the embodiments of the present disclosure. It should be noted that a variety of virtual objects may be set in the target application, and only the target object is taken as an example for illustration in the embodiments of the present disclosure.

Exemplarily, in some scenes, the electronic device acquires a plurality of groups of object images of the target object, each of the groups of object images corresponding to a different lighting condition. In response to acquiring the object images, the electronic device selects the object images based on the acquired scene image, instead of performing data processing on the object images first, to acquire object images whose lighting conditions are similar to lighting condition of the scene image, and then performs the above 302 to 305 based on the selected object images. That is, in some embodiments, the electronic device acquires the scene image and a plurality of candidate object images, wherein the plurality of candidate object images are acquired at different viewing angles under different lighting conditions. The electronic device determines a target lighting condition corresponding to the scene image, and determines the plurality of object images from the plurality of candidate object images based on the target lighting condition, wherein a similarity between the lighting condition corresponding to each of the object images and the target lighting condition satisfies a first reference condition. The electronic device performs the above 302 to 305 based on the selected object images. It should be noted that the method for determining the image lighting conditions by the electronic device is the same as the method for determining the image lighting conditions by the electronic device in above 301, which is not repeated herein. In the embodiments of the present disclosure, by selecting the object images based on the lighting condition of the scene image, the object image corresponding to the lighting condition similar to lighting condition of the scene image is selected for displaying the object, thereby effectively improving authenticity of the display effect of the target object in the scene image.

In 308, in response to a display instruction to the target object, the object image corresponding to each of the viewing angles corresponding to the target object, the spatial position information of the viewing angle corresponding to each of the object images, information of the reference points in each of the object images and pixel point change information corresponding to the viewing angle corresponding to each of the object images are acquired by decompressing data in the intermediate data format corresponding to the target object.

In some embodiments, in response to the display instruction to the target object, the electronic device acquires and decompresses the data in the intermediate data format corresponding to the target object. The display instruction to the target object may be triggered by the user. Exemplarily, the terminal calls the camera and displays a shooting interface in response to an acquire operation on the scene image, wherein the shooting interface displays the scene image shot by the camera in real time. In some embodiments, the shooting interface displays a plurality of object select controls, wherein one object select control corresponds to one object, and the object select control is configured to trigger, in response to a trigger operation on an object select control corresponding to the target object, the display instruction to the target object. The display instruction to the target object may also be triggered in other ways, which is not limited in the embodiments of the present disclosure. It should be noted that the method performed by the electronic device for decompressing the data is not limited in the embodiments of the present disclosure. Exemplarily, the data decompression method may be a decompression method corresponding to the bitwise compression method, the binary stream compression method, and the video compression method.

It should be noted that the above process of decompressing the data is optional. In some embodiments, the processes of compressing and decompressing the data related to the target object may not be performed.

In some embodiments, in the case that the electronic device acquires the data in the intermediate data format corresponding to the target object, the electronic device screens the data based on the target lighting condition corresponding to the scene image. Exemplarily, in 301, the electronic device acquires the plurality of groups of object images corresponding to the target object, each of the groups of the object images corresponding to a different lighting condition, and the electronic device performs the above 302 to 305 respectively based on each of the groups of the object images as a unit. That is, the electronic device can acquire data in the intermediate data format corresponding to the plurality of object images under each lighting condition. In the embodiments of the present disclosure, the data in the intermediate data format carries the corresponding lighting condition information. In some embodiments, the electronic device acquires the data in the intermediate data format which carries the lighting condition information the most similar to the target lighting condition from the data in the multiple intermediate data formats corresponding to the target object, decompress the acquired data in the intermediate data format, and perform subsequent process of displaying the object based on the data. In the embodiments of the present disclosure, by screening the data in the intermediate data format based on the target lighting condition of the scene image, the data that best matches the lighting condition of the scene image is acquired, such that authenticity of the display effect of the target object is effectively improved when the target object is displayed based on the data.

In 309, at least one reference viewing angle is determined from the viewing angles corresponding to the plurality of object images based on a target viewing angle of the scene image.

That is, the electronic device determines, based on a target viewing angle of the scene image, X reference viewing angles from viewing angles corresponding to the plurality of object images. X is a positive integer.

The target viewing angle is a viewing angle at which the scene image is acquired. The reference viewing angle and the target viewing angle are adjacent in terms of spatial position. In some embodiments, in the case that the difference value between the viewing angle corresponding to the object image and the target viewing angle satisfies a target condition, it is determined that the viewing angle corresponding to the object image and the target viewing angle are adjacent to each other in terms of spatial position, and the viewing angle corresponding to the object image is the reference viewing angle. The difference value between the two viewing angles refers to the difference value between the spatial positions of the two viewing angles. The target condition is determined by the developer, which is not limited in the embodiments of the present disclosure. For example, the target condition is determined to be the difference value between the viewing angle corresponding to the object image and the target viewing angle being less than a reference threshold, or the difference value between the viewing angle corresponding to the object image and the target viewing angle being minimum.

In some embodiments, the process of determining the at least one reference viewing angle by the electronic device includes the following processes.

In a first process, the electronic device determines a display position of the target object in the scene image.

In some embodiments, the electronic device is provided with an image recognition model, wherein the image recognition model may be a convolutional neural network model, and the like. The structure of the image recognition model is not limited in the embodiments of the present disclosure. For example, the image recognition model is a trained model. Exemplarily, the image recognition model is acquired by training based on sample images including a reference object, and the image recognition model may be configured to recognize the reference object in the scene image and determine position information of the reference object in the scene image. The reference object may be taken as a display carrier of the target object, and the target object is displayed on the reference object. For example, in the case that the target object is a hat, the reference object may be a head. Exemplarily, the electronic device inputs the scene image into the image recognition model; the image recognition model performs image recognition on the scene image to acquire position information, output by the image recognition model, of the scene image; and the electronic device determines the display position of the target object in the scene image based on the position information output by the image recognition model. Exemplarily, the electronic device directly takes the position indicated by the position information output by the image recognition model as the display position; or the electronic device adjusts the position information and determines the position indicated by the adjusted position information as the display position, which is not limited in the embodiments of the present disclosure. In the embodiments of the present disclosure, the scene image is recognized via the image recognition model, such that the display position of the target object in the scene image is accurately and quickly determined.

In some embodiments, the scene image carries label information, wherein the label information indicates the display position of the target object in the scene image. Exemplarily, in response to acquiring the scene image, the electronic device acquires the display position of the target object in the scene image by recognizing the label information carried by the scene image. The label information may be a quick response code, position coordinates, and the like, which is not limited in the embodiments of the present disclosure. In some embodiments, the label information is added by the user. For example, the user specifies a position in the scene image, and the electronic device generates the label information based on position information of the position, and carries the label information in the scene image. It should be noted that the method for adding the scene information is not limited in the embodiments of the present disclosure. In the embodiments of the present disclosure, the display position of the target object in the scene image is flexibly specified by carrying the label information.

It should be noted that the above description of the method for determining the display position of the target object in the scene image is only exemplary description of a possible implementation. The specific method for determining the display position of the target object in the scene image is not limited in the embodiments of the present disclosure.

In a second process, the electronic device determines, based on a position relationship between the display position and a center point of the scene image, position information of the viewing angle corresponding to each of the object images relative to the center point of the scene image.

In some embodiments, the electronic device determines the initial position information of the viewing angle corresponding to each of the object images relative to the target object image. In the embodiments of the present disclosure, the initial position information is the spatial position information of each of the viewing angles acquired in above 302. Then, the electronic device determines the position transformation information based on the position relationship between the display position and the center point of the scene image. Finally, the electronic device generates the position information of the viewing angle corresponding to each of the object images relative to the center point of the scene image by transforming, based on the position transformation information, the initial position information of each of the viewing angles. In some embodiments, the above position transformation information may be represented as a vector $(\Delta x, \Delta y, \Delta z)$, the initial position information is represented as spatial position coordinates $(x1, y1, z1)$, and each element in the vector indicates a change value of the coordinates in each direction in the initial position information. Transforming the initial position information of each of the viewing angles based on the position transformation information by the electronic device may include: adding, by the electronic device, the initial position information of each of the viewing angles with the position transformation information, and generating, by the electronic device, the position information $(x1+\Delta x, y1+\Delta y, z1+\Delta z)$ of each of the viewing angles relative to the center point of the scene image. In some embodiments, the above position transformation information is represented as a position transformation matrix. Exemplarily, a trained position transformation information generation model is deployed in the electronic device. The position transformation information generation model can output a position transformation matrix by performing data processing based on an input display position of the target object and the input position of center point of the scene image. Exemplarily, the electronic device transforms, based on the position transformation information, a viewing angle space of each of the viewing angles, and generates the position information of the viewing angle corresponding to each of the object images relative to the center point of the scene image by transforming the viewing angle space into the coordinate system of the scene image, namely, transforming the viewing angle space into the coordinate system where the center of the scene image is the origin. In the embodiments of the present disclosure, by generating the position information of the viewing angles corresponding to the object images relative to the center point of the scene image, namely, the positions of the viewing angle corresponding to the object images in the coordinate system where the center point of the scene image is the center, the viewing angles corresponding to the object images and the target viewing angle are disposed in the same spatial coordinate system, such that the adjacent relationship between the viewing angels is conveniently determined, and the reference viewing angle adjacent to the target viewing angle is conveniently determined.

In a third process, the electronic device determines a viewing angle, indicated by at least one piece of position information, adjacent to the target viewing angle in terms of spatial position as the at least one reference viewing angle.

That is, the electronic device determines, from a plurality of pieces of position information, X pieces of position information adjacent to the target viewing angle in terms of spatial position, and determines the X reference viewing angles based on viewing angles indicated by the X pieces of position information.

In some embodiments, the electronic device acquires the difference value between the position information of the viewing angle corresponding to each of the object images and the spatial position of the target viewing angle, screens a viewing angle indicated by at least one piece of position information whose difference value satisfies the target condition, and determines the screened viewing angle as the reference viewing angle adjacent to the target viewing angle. FIG. 5 is a schematic diagram of a method for determining a reference viewing angle according to an exemplary embodiment. As shown in FIG. 5, the direction of the target viewing angle 501 can fall into any triangle 503 in a viewing angle space 502. The viewing angles corresponding to the three vertices of the triangle 503 are the viewing angles adjacent to the target viewing angle in terms of spatial position.

That is, the viewing angles corresponding to the three vertices of the triangle 503 are the reference viewing angles. It should be noted that a number of reference viewing angles is not limited in the embodiments of the present disclosure.

It should be noted that the above description of the method for determining the reference viewing angle is only exemplary description of a possible implementation. The specific method for determining the reference viewing angle is not limited in the embodiments of the present disclosure. In the embodiments of the present disclosure, by selecting the reference viewing angle adjacent to an observation angle of the scene image and performing the process of displaying the object based on the relevant data corresponding to the reference viewing angle, an angle for displaying the target object in the scene image is in line with the observation angle of the scene image, thereby improving authenticity of the display effect of the object.

In 310, based on at least one piece of target pixel point change information and the position difference information between the at least one reference viewing angle and the target viewing angle, an intermediate image corresponding to the reference viewing angle is generated by transforming positions of pixel points in the object image corresponding to the reference viewing angle.

The target pixel point change information indicates pixel point change between the object image corresponding to the reference viewing angle and an object image corresponding to an adjacent viewing angle of the reference viewing angle. In some embodiments, the electronic device acquires the target pixel point change information from the pixel point change information acquired in 305. Exemplarily, each piece of pixel point change information carries a viewing angle identifier, and the electronic device acquires pixel point change information carrying the viewing angle identifier of the reference viewing angle as the target pixel point change information. It should be noted that a specific method for acquiring the pixel point change information is not limited in the embodiments of the present disclosure. In the embodiments of the present disclosure, the target pixel point change information is selected, and the target pixel point change information corresponding to the reference viewing angles is applicable to the process of displaying the object, such that authenticity of the display effect of the object is improved.

In some embodiments, the electronic device generates, for any reference viewing angle, pixel point displacement information of an object image corresponding to the reference viewing angle by multiplying the target pixel point change information corresponding to the object image corresponding to the reference viewing angle by target position difference information corresponding to the object image corresponding to the reference viewing angle, wherein the target position difference information indicates position difference between the reference viewing angle and the target viewing angle. The electronic device generates the intermediate image corresponding to the reference viewing angle by transforming, based on the pixel point displacement information of the object image corresponding to the reference viewing angle, the positions of pixel points in the object image corresponding to the reference viewing angle, wherein the intermediate image can reflect a display effect of the target object at the target viewing angle. In some embodiments, the above process is represented as the following formula (3):

$$[00114] \quad v' = v + M[I,v] * (Q - I) \quad (3)$$

In the above formula, Q represents the target viewing angle; I represents the reference viewing angle; (Q - I) represents the target position difference information; v represents a reference point in the object image corresponding to the reference viewing angle I; M[I, v] represents the target pixel point change information corresponding to the reference viewing angle I; and v' represents the reference point after the position is moved. In some embodiments, the electronic device performs corresponding position transformation, based on the position change of each reference point, on pixel points around each reference point to generate the intermediate image. For example, the electronic device correspondingly shifts the pixel points around each reference point based on the moving distance and direction of each reference point, to achieve the effect of image distortion on each region of the object image, which is not limited in the embodiments of the present disclosure.

In some embodiments, the electronic device further stores a corresponding relationship between each reference point and the texture of the object image. A mapping relationship between each reference point in each of the object images and the texture of the object image is unchanged. In response to transforming the position of each reference point based on the above formula (3), the electronic device regenerates object graphics based on the corresponding relationship between each reference point and the texture of the object image, which is equivalent to transforming the position information of each pixel point in the object image. The newly generated object image is the intermediate image.

In the embodiments of the present disclosure, the intermediate image that is more in line with the observation angle of the scene image is generated by transforming the object image, and target object is subsequently displayed based on the intermediate image, such that the display effect of the target object is improved.

It should be noted that 310 is illustrated by taking generating the intermediate image corresponding to any one of the reference viewing angles as an example. In some other embodiments, for the X reference viewing angles, the intermediate images corresponding to the X reference viewing angle can be generated by the above implementation. That is, the electronic device generates pixel point displacement information of the object image corresponding to each of the X reference viewing angles by multiplying the target pixel point change information corresponding to the object image corresponding to each of the X reference viewing angles by target position difference information corresponding to the object image corresponding to each of the X reference viewing angles; and generates the intermediate images corresponding to the X reference viewing angles by transforming, based on the pixel point displacement information of the object images corresponding to the X reference viewing angles, the positions of pixel points in the object images corresponding to the X reference viewing angles.

In 311, the at least one intermediate image generated and superimposed on the scene image is displayed.

That is, X intermediate images superimposed on the scene image are displayed.

In some embodiments, the electronic device determines, based on a weight corresponding to each reference viewing angle, a transparency of the intermediate image corresponding to each reference viewing angle, that is, determining a transparency of the intermediate image corresponding to each of the X reference viewing angles; and superimposes the intermediate images with different transparencies on the scene image. The transparency is negatively related to the weight corresponding to the reference viewing angle, and the weight is positively related to a difference value between the reference viewing angle and the target viewing angle. In some embodiments, the electronic device determines the weight corresponding to each reference viewing angle based on the following formula (4):

$$[00122] \quad a * I + b * J + c * H = Q \quad (4)$$

In the above formula, a, b, and c represent weights; a + b + c = 1; H, I, and J represent the viewing angles corresponding to the object images; and Q represents the target viewing angle. The electronic device determines the weights a, b, and c by solving the above formula (4). In some embodiments, the electronic device may also determine the weight of each of the viewing angles in other ways, which is not limited in the embodiments of the present disclosure. In the embodiments of the present disclosure, by processing the images corresponding to different viewing angles using different transparency, the display effect of the target object in the scene image is improved.

In the technical solution according to the embodiments of the present disclosure, the target object is described with the object images acquired from the plurality of viewing angles. The plurality of object images can fully retain detail information of the target object. In the case that the target object superimposed on the scene image is displayed, an object image with a shooting angle adjacent to the target viewing angle is selected from the object images based on the target viewing angle corresponding to the scene image; the image transformation is performed on the selected object image based on pixel point change information corresponding to the selected object image and the position difference between the reference viewing angle and the target viewing angle, such that the viewing angle corresponding to the selected object image is more in line with the target viewing angle corresponding to the scene image; and the transformed object image is superimposed on the scene image, such that the target object is displayed in the scene image more truly, and the realism of the target object is improved.

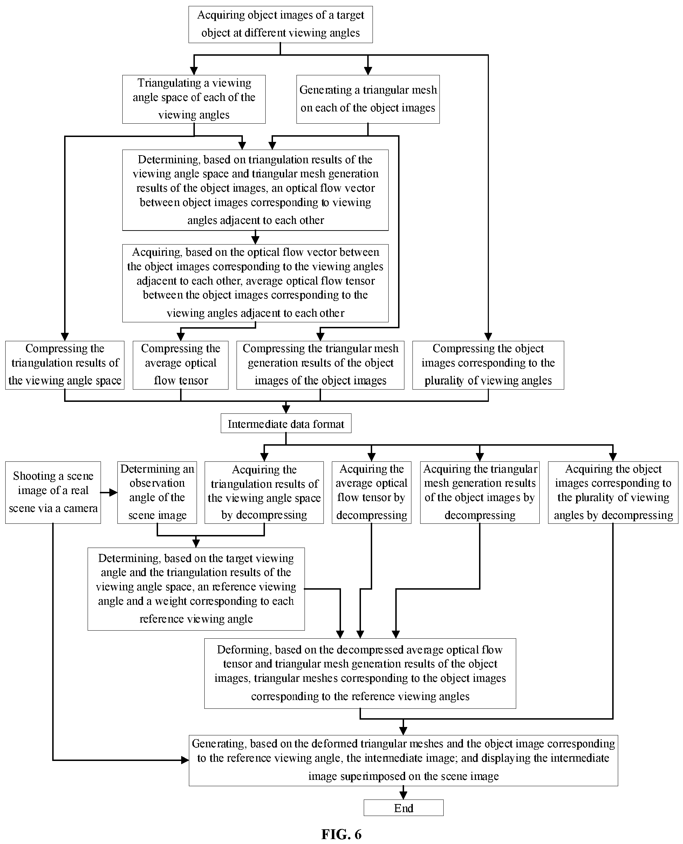

FIG. 6 is a flowchart of a method for displaying objects according to an exemplary embodiment. The above process of displaying the object is described below with reference to FIG. 6. In some embodiments, the electronic device acquires object images of a target object at different viewing angles; triangulates a viewing angle space of each of the viewing angles; generates a triangular mesh on each of the object images; determines, based on triangulation results of the viewing angle space and triangular mesh generation results of the object images, an optical flow vector between object images corresponding to viewing angles adjacent to each other, that is, acquiring the optical flow information by performing the process in 304 for example; and acquires, based on the optical flow vector between the object images corresponding to the viewing angles adjacent to each other, average optical flow tensor between the object images corresponding to the viewing angles adjacent to each other, that is, acquiring pixel point change information by performing the process in 305 for example. In response to acquiring the relevant data of the target object, the electronic device compresses the data, and stores the compressed data, that is, performing the process in 306for example. Exemplarily, the electronic device compresses the triangulation results of the viewing angle space, the average optical flow tensor, the triangular mesh generation results of the object images, and the object images corresponding to the plurality of viewing angles. The electronic device stores the compressed data as data in an intermediate data format. The electronic device may determine an observation angle of a scene image by shooting the scene image of a real scene via a camera, namely, determining a target viewing angle corresponding to the scene image. The electronic device acquires the triangulation results of the viewing angle space, the average optical flow tensor, the triangular mesh generation results of the object images, and the object images corresponding to the plurality of viewing angles by decompressing the above data in the intermediate data format. The electronic device determines, based on the target viewing angle and the triangulation results of the viewing angle space, an reference viewing angle and a weight corresponding to each reference viewing angle; deforms, based on the decompressed average optical flow tensor and triangular mesh generation results of the object images, triangular meshes corresponding to the object images corresponding to the reference viewing angles; generates, based on the deformed triangular meshes and the object image corresponding to the reference viewing angle, the intermediate image; and displays the intermediate image superimposed on the scene image to acquire the display effect of the target object in the scene image.

In the method for displaying the objects according to the embodiments of the present disclosure, instead of relying on the traditional three-dimensional model, the desired display effect of the object in the scene image is achieved by taking the object images corresponding to the plurality of viewing angles as input data, processing the object images corresponding to the plurality of viewing angles, and displaying and superimposing the processed object images on the scene image. In the technical solution according to the embodiments of the present disclosure, the object images corresponding to the plurality of viewing angles are directly taken as input data to describe the appearance of the object, such that a complicated modeling construction process is avoided, and the cost of acquiring the input data is reduced. For example, the time for acquiring the input data is reduced to a level as short as a few minutes by directly collecting the object image, and the object images include abundant detail information by acquiring the object images from different view angles. Further, a conventional three-dimensional model rendering method in AR technology is difficult to achieve highly realistic feeling, and takes long calculation time in the process of model rendering, which makes it hard to ensure the real-time performance in model rendering. In the embodiments of the present disclosure, real-time display of the object and the photo-level authenticity can be realized. Furthermore, the three-dimensional model in prior art needs lot of data support from the electronic device because the accurate three-dimensional model requires introduction of more detail information such as the geometry, texture, material and other information which can result in the exponential increase in the storage space as the accuracy increases. However, in the embodiments of the present disclosure, there is no need of the three-dimensional model, and the data related to the target object can be compressed and stored. That is, the storage space is insensitive to details, such that retaining a lot of details with less storage space is realized. Moreover, it is difficult for the conventional three-dimensional model to express a complex optically-sensitive material such as a translucent material. For example, various optical phenomena such as secondary reflection, translucency, diffraction and scattering, and the optically-sensitive materials require special expression and special calculation in the common three-dimensional model, which are difficult to realize. However, in the embodiments of the present disclosure, because the object images can be taken/acquired under different light conditions and optical effect is inherently incorporated in the taken/acquired object images, there is no need to explore optical processes of displaying the object, such that in-depth analysis of these complex optical processes is avoided, thereby effectively reducing the complexity of data processing by the electronic device, and reducing the calculation load of the electronic device.

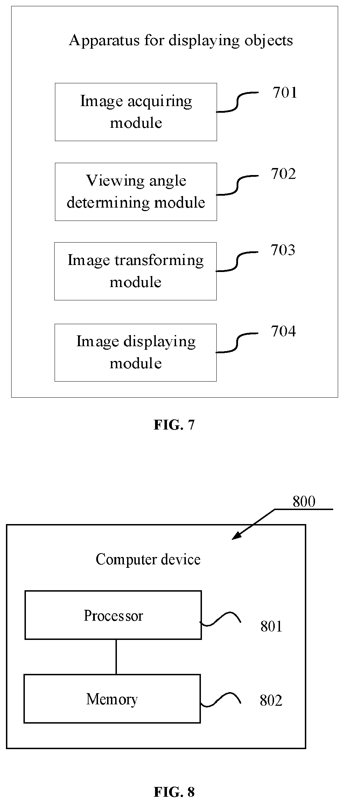

FIG. 7 is a block diagram of an apparatus for displaying objects according to an exemplary embodiment. Referring to FIG. 7, the apparatus includes an image acquiring module 701, a viewing angle determining module 702, an image transforming module 703, and an image displaying module 704.

The image acquiring module 701 is configured to acquire a scene image and a plurality of object images of a target object, wherein the plurality of object images correspond to different viewing angles.

The viewing angle determining module 702 is configured to determine, based on a target viewing angle of the scene image, X reference viewing angles from viewing angles corresponding to the plurality of object images, wherein the target viewing angle is a viewing angle at which the scene image is acquired, each of the X reference viewing angles is adjacent to the target viewing angle in terms of spatial position, and X is a positive integer.

The image transforming module 703 is configured to generate intermediate images corresponding to the X reference viewing angles by transforming, based on X pieces of target pixel point change information and position difference information between the X reference viewing angles and the target viewing angle, positions of pixel points in object images corresponding to the X reference viewing angles, wherein the target pixel point change information indicates a pixel point change between the object image corresponding to the reference viewing angle and an object image corresponding to an adjacent viewing angle of the reference viewing angle, the adjacent viewing angle of the reference viewing angle is a viewing angle adjacent to the reference viewing angle in terms of spatial position, and each of the intermediate images indicates a display effect of the target object at the target viewing angle.

The image displaying module 704 is configured to display the intermediate images superimposed on the scene image.

In some embodiments, the image acquiring module 701 is configured to:

acquire the scene image and a plurality of candidate object images, wherein the plurality of candidate object images are acquired at different viewing angles under different lighting conditions;
determine a target lighting condition corresponding to the scene image; and
determine the plurality of object images from the plurality of candidate object images based on the target lighting condition, wherein a similarity between the lighting condition corresponding to each of the object images and the target lighting condition satisfies a first reference condition.

In some embodiments, the viewing angle determining module 702 includes a first determining unit, a second determining unit, and a third determining unit.

The first determining unit is configured to determine a display position of the target object in the scene image.

The second determining unit is configured to determine, based on a position relationship between the display position and a center point of the scene image, position information of the viewing angle corresponding to each of the object images relative to the center point.

The third determining unit is configured to determine, from a plurality of pieces of position information, X pieces of position information adjacent to the target viewing angle in terms of spatial position.

The third determining unit is further configured to determine the X reference viewing angles based on viewing angles indicated by the X pieces of position information.

In some embodiments, the second determining unit is configured to:

determine initial position information of the viewing angle corresponding to each of the object images relative to the target object;
determine position transformation information based on the position relationship between the display position and the center point; and
generate the position information of the viewing angle corresponding to each of the object images relative to the center point by transforming the initial position information of each viewing angle based on the position transformation information.

In some embodiments, the apparatus further includes an information acquiring module and an information determining module.

The information acquiring module is configured to acquire pixel point change information corresponding to Y viewing angles, wherein the pixel point change information indicates a pixel point change between an object image corresponding to any viewing angle of the Y viewing angles and an object image corresponding to an adjacent viewing angle of the viewing angle, and Y is a positive integer.

The information determining module is configured to determine the target pixel point change information corresponding to each of the X reference viewing angles from the pixel point change information corresponding to the Y viewing angles.

In some embodiments, the information acquiring module includes a fourth determining unit, a fifth determining unit, and a sixth determining unit.

The fourth determining unit is configured to determine a reference point in the object image corresponding to each of the Y viewing angles.

The fifth determining unit is configured to determine optical flow information corresponding to the reference points, wherein the optical flow information indicates a pixel point change between the object image corresponding to the viewing angle and the object image corresponding to an adjacent viewing angle of the viewing angle at the reference point.

The sixth determining unit is configured to determine, based on the optical flow information corresponding to each of the reference points and position difference information between the Y viewing angles and the adjacent viewing angles of the Y viewing angles, the pixel point change information corresponding to each of the viewing angles.

In some embodiments, the fourth determining unit is configured to:

determine a feature point in each of the Y object images based on an image feature of each of the Y object images; and
acquire a triangular mesh corresponding to each of the Y object images by generating, based on the feature points, the triangular mesh on the Y object images, wherein vertices of each triangle in the triangular mesh are the reference points in the object image.

In some embodiments, the sixth determining unit is configured to:

determine, based on the position difference information between a $Z^{th}$ viewing angle and an adjacent viewing angle of the $Z^{th}$ viewing angle and optical flow information corresponding to each reference point in the object image corresponding to the $Z^{th}$ viewing angle, initial pixel point change information corresponding to each reference point, wherein Z is a positive integer less than or equal to Y; and
generate, based on an average value of at least one piece of initial pixel point change information corresponding to each reference point, the pixel point change information corresponding to the $Z^{th}$ viewing angle.

In some embodiments, the image transforming module 703 is configured to:

generate pixel point displacement information of the object image corresponding to each of the X reference viewing angles by multiplying the target pixel point change information corresponding to the object image corresponding to each of the X reference viewing angles by target position difference information corresponding to the object image corresponding to each of the X reference viewing angles, wherein the target position difference information indicates position difference between the reference viewing angle and the target viewing angle; and
generate the intermediate images corresponding to the X reference viewing angles by transforming, based on the pixel point displacement information of the object images corresponding to the X reference viewing angles, the positions of pixel points in the object images corresponding to the X reference viewing angles.

In some embodiments, the image displaying module 704 is configured to:

determine a transparency of the intermediate image corresponding to each of the X reference viewing angles, wherein the transparency is negatively related to a weight corresponding to the reference viewing angle, and the weight is positively related to a difference value between the reference viewing angle and the target viewing angle; and
superimpose the intermediate images with different transparencies on the scene image.

With respect to the apparatus in the above embodiments, the operations performed by the modules in the apparatus have been described in detail in the embodiments of the related methods, and details are not described herein.

FIG. 8 is a block diagram of an electronic device according to an exemplary embodiment. Significant differences may be generated when the electronic device 800 has different configurations or performances. The electronic device 800 may include one or more central processing units (CPUs) 801 and one or more memories 802 storing at least one program code therein, wherein the one or more processors 801, when loading and executing the at least one program code, are caused to perform the process performed by the electronic device in the method for displaying the objects according to each method embodiment. The electronic device 800 may further include components such as a wired or wireless network interface, a keyboard, an input/output interface, and other components for input and output. The electronic device 800 may further include other components for implementing device functions, which are not repeated herein.

In some embodiments, the electronic device includes one or more processors and a memory configured to store one or more program codes executable by the one or more processors. The one or more processors, when loading and executing the one or more program codes, are caused to perform the above method for displaying the objects.

In some exemplary embodiments, a non-transitory computer-readable storage medium including a program code is further provided, such as a memory including a program code. The program code, when loaded and executed by the processor 801 of the electronic device 800, causes the electronic device 800 to perform the method for displaying the objects. Optionally, the computer-readable storage medium may be a read-only memory (ROM), a random-access memory (RAM), a compact disc read-only memory (CD-ROM), a magnetic tape, a floppy disk, an optical data storage device, and the like.

In some embodiments, the one or more program codes, when loaded and executed by a processor of an electronic device, cause the electronic device to perform the above method for displaying the objects.

In some exemplary embodiments, a computer program product including a computer program is further provided, wherein the computer program, when loaded and run by a processor, causes the processor to perform the method for displaying the objects.

The following section describes additional aspects and features of the method for displaying objects and the electronic device and the non-transitory computer-readable medium storing program code, without limitation as a series of paragraphs, some or all of which may be alphanumerically designated for clarity and efficiency. Each of these paragraphs can be combined with one or more other paragraphs, and/or with disclosure from elsewhere in this application, in any suitable manner. Some of the paragraphs below may expressly refer to and further limit other paragraphs, providing without limitation examples of some of the suitable combinations.

A0. A method for displaying a target object on a scene image, implemented by an electronic device, the method including:

acquiring the scene image and a target viewing angle of the scene image, wherein the target viewing angle is a viewing angle at which the scene image is acquired;

acquiring a plurality of object images of the target object, wherein the plurality of object images are acquired at different viewing angles, and each viewing angle corresponds to one spatial position and the spatial position indicates a position of the viewing angle relative to the target object;

based on the target viewing angle, determining at least one reference viewing angle from the viewing angles corresponding to the plurality of object images, wherein the reference viewing angle is adjacent to the target viewing angle in terms of spatial position;

based on target pixel point change information and position difference information between the at least one reference viewing angle and the target viewing angle, generating at least one intermediate image corresponding to the reference viewing angle by transforming positions of pixel points in an object image corresponding to the reference viewing angle, wherein the target pixel point change information indicates a pixel point change between the object image corresponding to the reference viewing angle and an object image corresponding to an adjacent viewing angle of the reference viewing angle, wherein the reference viewing angle and the adjacent viewing angle of the reference viewing angle are adjacent in terms of spatial position, and wherein the intermediate image represents a display effect of the target object at the target viewing angle; and

superimposing and displaying the intermediate image on the scene image.

A1. The method of paragraph A0, wherein spatial position information of viewing angle corresponding to the object images is determined in a constructed spatial coordinate system with the target object as a center.

A2. The method of paragraph A0, wherein the pixel point change between the object image corresponding to the reference viewing angle and the object image corresponding to the adjacent viewing angle of the reference viewing angle is acquired by the following processes:

determining reference points in the object image corresponding to each of the viewing angles, wherein the reference points are vertices on a triangular mesh corresponding to the object image corresponding to each of the viewing angles, and wherein the triangular mesh is generated based on feature points in the object image corresponding to each of the viewing angles and the feature points are configured to label the target object;

for the reference points in the object image corresponding to each of the viewing angles, determining optical flow information corresponding to the reference points, wherein the optical flow information indicates the pixel point position change between the object image corresponding to the viewing angle and the object image corresponding to an adjacent viewing angle of the viewing angle; and

based on the optical flow information corresponding to the reference points and position difference information between the viewing angles and the adjacent viewing angle of the viewing angles, determining the pixel point change between the object image corresponding to the reference viewing angle and the object image corresponding to the adjacent viewing angle of the reference viewing angle.

A3. The method of paragraph A2, wherein prior to generating the at least one intermediate image, the object images corresponding to each of the viewing angles corresponding to the target object, spatial position information of the viewing angle corresponding to each of the object images, information of the reference points in each of the object images and pixel point change information corresponding to the viewing angle corresponding to each of the object images are compressed and stored as compressed data in an intermediate data format.

A4. The method of paragraph A3, further including: in response to a display instruction to the target object, decompressing the compressed data in the intermediate data format to obtain the object image corresponding to each of the viewing angles corresponding to the target object, the spatial position information of the viewing angle corresponding to each of the object images, information of the reference points in each of the object images and pixel point change information corresponding to the viewing angle corresponding to each of the object images for generating the at least one intermediate image.

All the embodiments of the present disclosure may be practiced individually or in combination with other embodiments, and these embodiments are all regarded as being within the protection scope of the present disclosure.

**Claims**

1. A method for displaying objects, **characterized by** comprising:

   acquiring (201) a scene image and a plurality of object images of a target object, wherein the plurality of object images correspond to different viewing angles;
   determining (202), based on a target viewing angle of the scene image, X reference viewing angles from the viewing angles corresponding to the plurality of object images, wherein the target viewing angle is a viewing angle at which the scene image is acquired, each of the X reference viewing angles is adjacent to the target viewing angle in terms of spatial position, and X is a positive integer;
   generating (203) intermediate images corresponding to the X reference viewing angles by transforming, based on X pieces of target pixel point change information and position difference information between the X reference viewing angles and the target viewing angle, positions of pixel points in object images corresponding to the X reference viewing angles, wherein the target pixel point change information indicates a pixel point change between the object image corresponding to the reference viewing angle and an object image corresponding to an adjacent viewing angle of the reference viewing angle, the adjacent viewing angle of the reference viewing angle is a viewing angle adjacent to the reference viewing angle in terms of spatial position, and each of the intermediate images indicates a display effect of the target object at the target viewing angle; and
   displaying (204) the intermediate images superimposed on the scene image.

2. The method according to claim 1, wherein said acquiring (201) the scene image and the plurality of object images of the target object comprises:

   acquiring the scene image and a plurality of candidate object images, wherein the plurality of candidate object images are acquired at the different viewing angles under different lighting conditions;
   determining a target lighting condition corresponding to the scene image; and
   determining the plurality of object images from the plurality of candidate object images, wherein a similarity between the lighting condition corresponding to each of the object images and the target lighting condition satisfies a first reference condition.

3. The method according to claim 1 or 2, wherein said determining (202), based on the target viewing angle of the scene image, the X reference viewing angles from the viewing angles corresponding to the plurality of object images comprises:

   determining a display position of the target object in the scene image;
   determining, based on a position relationship between the display position and a center point of the scene image, position information of the viewing angle corresponding to each of the object images relative to the center point;
   determining, from a plurality of pieces of position information, X pieces of position information adjacent to the target viewing angle in terms of spatial position; and
   determining the X reference viewing angles based on viewing angles indicated by the X pieces of position information.

4. The method according to claim 3, wherein said determining the position information of the viewing angle corresponding to each of the object images relative to the center point comprises:

   determining initial position information of the viewing angle corresponding to each of the object images relative to the target object;
   determining position transformation information based on the position relationship between the display position and the center point; and
   generating the position information of the viewing angle corresponding to each of the object images relative to the center point by transforming the initial position information of each of the viewing angles based on the position transformation information.

5. The method according to any one of claims 1 to 4, further comprising:

acquiring pixel point change information corresponding to Y viewing angles, wherein the pixel point change information indicates a pixel point change between an object image corresponding to any viewing angle of the Y viewing angles and an object image corresponding to an adjacent viewing angle of the viewing angle, and Y is a positive integer; and

determining the target pixel point change information corresponding to each of the X reference viewing angles from the pixel point change information corresponding to the Y viewing angles.

**6.** The method according to claim 5, wherein said acquiring the pixel point change information corresponding to the Y viewing angles comprises:

determining a reference point in the object image corresponding to each of the Y viewing angles;

determining, optical flow information corresponding to the reference points, wherein the optical flow information indicates a pixel point change between the object image corresponding to the viewing angle and the object image corresponding to an adjacent viewing angle of the viewing angle at the reference point; and

determining, based on the optical flow information corresponding to each of the reference points and position difference information between the Y viewing angles and the adjacent viewing angles of the Y viewing angles, the pixel point change information corresponding to each of the Y viewing angles.

**7.** The method according to claim 6, wherein said determining the reference point in the object image corresponding to each of the Y viewing angles comprises:

determining a feature point in each of Y object images based on an image feature of each of the Y object images; and

acquiring a triangular mesh corresponding to each of the Y object images by generating, based on the feature points, the triangular mesh on the Y object images, wherein vertices of each triangle in the triangular mesh are the reference points in the object image.

**8.** The method according to claim 6, wherein said determining the pixel point change information corresponding to each of the Y viewing angles comprises:

determining, based position difference information between a $Z^{th}$ viewing angle and an adjacent viewing angle of the $Z^{th}$ viewing angle and optical flow information corresponding to each reference point in the object image corresponding to the $Z^{th}$ viewing angle, initial pixel point change information corresponding to each reference point, wherein Z is a positive integer less than or equal to Y; and

generating, based on an average value of at least one piece of initial pixel point change information corresponding to each reference point, the pixel point change information corresponding to the $Z^{th}$ viewing angle.

**9.** The method according to any one of claims 1 to 8, wherein said generating (203) the intermediate images corresponding to the X reference viewing angles by transforming the positions of the pixel points in the object images corresponding to the X reference viewing angles comprises:

generating pixel point displacement information of the object image corresponding to each of the X reference viewing angles by multiplying the target pixel point change information corresponding to the object image corresponding to each of the X reference viewing angles by target position difference information corresponding to the object image corresponding to each of the X reference viewing angles, wherein the target position difference information indicates position difference between the reference viewing angle and the target viewing angle; and

generating the intermediate images corresponding to the X reference viewing angles by transforming, based on the pixel point displacement information of the object images corresponding to the X reference viewing angles, the positions of pixel points in the object images corresponding to the X reference viewing angles.

**10.** The method according to claim 1, wherein said displaying (204) the intermediate images superimposed on the scene image comprises:

determining a transparency of the intermediate image corresponding to each of the X reference viewing angles, wherein the transparency is negatively related to a weight corresponding to the reference viewing angle, and the weight is positively related to a difference value between the reference viewing angle and the target viewing angle; and

superimposing the intermediate images with different transparencies on the scene image.

**11.** An apparatus for displaying objects, **characterized by** comprising:

an image acquiring module (701), configured to acquire a scene image and a plurality of object images of a target object, wherein the plurality of object images correspond to different viewing angles;

a viewing angle determining module (702), configured to determine, based on a target viewing angle of the scene image, X reference viewing angles from the viewing angles corresponding to the plurality of object images, wherein the target viewing angle is a viewing angle at which the scene image is acquired, each of the X reference viewing angles is adjacent to the target viewing angle in terms of spatial position, and X is a positive integer;

an image transforming module (703), configured to generate intermediate images corresponding to the X reference viewing angles by transforming, based on X pieces of target pixel point change information and position difference information between the X reference viewing angles and the target viewing angle, positions of pixel points in object images corresponding to the X reference viewing angles, wherein the target pixel point change information indicates a pixel point change between the object image corresponding to the reference viewing angle and an object image corresponding to an adjacent viewing angle of the reference viewing angle, the adjacent viewing angle of the reference viewing angle is a viewing angle adjacent to the reference viewing angle in terms of spatial position, and each of the intermediate images indicates a display effect of the target object at the target viewing angle; and

an image displaying module (704), configured to display the intermediate images superimposed on the scene image.

12. The apparatus according to claim 11, wherein the image acquiring module (701) is configured to:

acquire the scene image and a plurality of candidate object images, wherein the plurality of candidate object images are acquired at the different viewing angles under different lighting conditions;

determine a target lighting condition corresponding to the scene image; and

determine the plurality of object images from the plurality of candidate object images, wherein a similarity between the lighting condition corresponding to each of the object images and the target lighting condition satisfies a first reference condition.

13. The apparatus according to claim 11 or 12, wherein the viewing angle determining module (702) comprises:

a first determining unit, configured to determine a display position of the target object in the scene image;

a second determining unit, configured to determine, based on a position relationship between the display position and a center point of the scene image, position information of the viewing angle corresponding to each of the object images relative to the center point;

a third determining unit, configured to determine, from a plurality of pieces of position information, X pieces of position information adjacent to the target viewing angle in terms of spatial position; wherein

the third determining unit is further configured to determine the X reference viewing angles based on viewing angles indicated by the X pieces of position information.

14. The apparatus according to claim 13, wherein the second determining unit is configured to:

determine initial position information of the viewing angle corresponding to each of the object images relative to the target object;

determine position transformation information based on the position relationship between the display position and the center point; and

generate the position information of the viewing angle corresponding to each of the object images relative to the center point by transforming the initial position information of each of the viewing angles based on the position transformation information.

15. A non-transitory computer-readable storage medium storing one or more program codes therein, wherein the one or more program codes, when loaded and executed by a processor of an electronic device, cause the electronic device to perform the method for displaying the objects as defined in any one of claims 1 to 10.

**FIG. 1**

| 201 |
| --- |
| Acquiring a scene image and a plurality of object images of a target object, wherein the plurality of object images correspond to different viewing angles |

| 202 |
| --- |
| Determining, based on a target viewing angle of the scene image, X reference viewing angles from the viewing angles corresponding to the plurality of object images, wherein the target viewing angle is a viewing angle at which the scene image is acquired, each of the X reference viewing angles is adjacent to the target viewing angle in terms of spatial position |

| 203 |
| --- |
| Generating intermediate images corresponding to the X reference viewing angles by transforming, based on X pieces of target pixel point change information and position difference information between the X reference viewing angles and the target viewing angle, positions of pixel points in object images corresponding to the X reference viewing angles, wherein the target pixel point change information indicates a pixel point change between the object image corresponding to the reference viewing angle and an object image corresponding to an adjacent viewing angle of the reference viewing angle, the adjacent viewing angle of the reference viewing angle is a viewing angle adjacent to the reference viewing angle in terms of spatial position, and each of the intermediate images indicates a display effect of the target object at the target viewing angle |

| 204 |
| --- |
| Displaying the intermediate images superimposed on the scene image |

**FIG. 2**

301

Acquiring a plurality of object images of a target object

302

Determining spatial position information of viewing angle corresponding to each of the object images

303

Determining a reference point in the object image corresponding to each viewing angle

304

Determining, for any reference point in the object image corresponding to any viewing angle, optical flow information corresponding to the reference point

305

Determining the pixel point change information between the object image corresponding to any viewing angle and the object image corresponding to the adjacent viewing angle of the viewing angle based on the optical flow information corresponding to the reference point and position difference information between the viewing angle and the adjacent viewing angle of the viewing angle

306

Compressing the spatial position information of the viewing angle corresponding to each of the object images, each of the object images, the information of the reference point in each of the object images, and the pixel point change information corresponding to the viewing angle corresponding to each of the object images, and storing the compressed data in an intermediate data format

307

Acquiring a scene image

308

Acquiring, in response to a display instruction to the target object, the object image corresponding to each of the viewing angles corresponding to the target object, the spatial position information of the viewing angle corresponding to each of the object images, information of the reference points in each of the object images and pixel point change information corresponding to the viewing angle corresponding to each of the object images by decompressing data in the intermediate data format corresponding to the target object

309

Determining at least one reference viewing angle from the viewing angles corresponding to the plurality of object images based on a target viewing angle of the scene image

310

Generating, based on at least one piece of target pixel point change information and the position difference information between the at least one reference viewing angle and the target viewing angle, an intermediate image corresponding to the reference viewing angle by transforming positions of pixel points in the object image corresponding to the reference viewing angle

311

Displaying the at least one intermediate image generated and superimposed on the scene image

FIG. 3

**FIG. 4A**

**FIG. 4B**

**FIG. 5**

**FIG. 6**

Apparatus for displaying objects

Image acquiring module — 701

Viewing angle determining module — 702

Image transforming module — 703

Image displaying module — 704

**FIG. 7**

800

Computer device

Processor — 801

Memory — 802

**FIG. 8**